Europäisches Patentamt

European Patent Office

Office européen des brevets

(11) Publication number: **0 083 161**
A1

# EUROPEAN PATENT APPLICATION

(21) Application number: **82306464.7**

(22) Date of filing: **06.12.82**

(51) Int. Cl.³: **F 16 C 33/78**
**F 16 D 3/41**

(30) Priority: **09.12.81 GB 8137193**

(43) Date of publication of application:
**06.07.83 Bulletin 83/27**

(84) Designated Contracting States:
**DE FR GB IT SE**

(71) Applicant: **BRD COMPANY LIMITED**
**P.O. Box 2**
**Aldridge Walsall WS9 8DT(GB)**

(72) Inventor: **Fisher, Leslie George**
**74 Clivedon Avenue**
**Perry Barr Birmingham(GB)**

(74) Representative: **Dodd, Graham Marshall et al,**
**Guest Keen & Nettlefolds Plc. Group Patents and**
**Licensing Department PO Box 55 Cranford Street**
**Smethwick Warley West Midlands B66 2RZ(GB)**

(54) Hooked universal joints.

(57) A bearing cup (10) for a Hookes universal joint, with a groove which provides a running surface for a seal (18, 19) fixed to the joint trunnion (14) and retains lubricant for the seal when the joint is in use. The groove may be defined by a separate annular sheet metal member (22, 23, 24) pressed into the bearing cup (10), the member also serving to locate the needle rollers (13) within the bearing cup.

FIG 1

EP 0 083 161 A1

GMD/81.091     HOOKES UNIVERSAL JOINTS

This invention relates to Hookes universal joints.  A Hookes universal joint comprises two yokes each having spaced substantially parallel arms, and a cross-member having trunnions received in bearing cups supported in the arms of the yokes.

For satisfactory operation of a hookes universal joint, it is necessary that lubricant is retained in the bearing cups to lubricate the needle roller bearings which are usually provided between the trunnions and cups.  To retain such lubricant, and exclude dirt, it is necessary that a seal be established between each trunnion and its bearing cup at the radially innermost end of the bearing cup, having regard to the axis of rotation of the cross-member of the joint in use.  Such a seal can comprise, for example, a cork ring, but more recently elastomeric seals have been used with annular sealing lips which engage the end faces of the bearing cup walls.  For satisfactory life and performance of a seal with a sealing lip, it must be lubricated.  It is the object of the present invention to provide for satisfactory lubrication of such a seal.

According to the present invention, we provide a bearing cup for a hookes universal joint, including a formation at the free end of the side wall thereof adapted to be engaged by an annular sealing member and arranged to retain lubricant for the sealing member therein under centrifugal force when in use.  The formation may comprise an annular groove which faces the axis of rotation of the joint when in use.

By the provision of such a formation, lubrication of the seal is ensured by retaining lubricant which would otherwise be centrifuged away from the region of the seal due to rotation of the joint in use.

A further development of the invention arises from the situation that the load carrying capacity of a hookes universal joint can be increased while maintaining the same overall size of joint by making the walls of the bearing cups thinner and increasing the thickness of the needle roller bearings. In this case, the wall of the bearing cup may be too thin to provide a satisfactory formation for engagement by the annular seal.

To overcome this problem, the invention provides that said formation may be provided by an annular member fixed to the bearing cup. The annular member may be of sheet metal, and afford, in cross-section, a base portion for engagement by said seal and upstanding wall portions defining said annular groove. The upstanding wall portions also serve to stiffen the annular member to enable it to resist loads which may be imposed on it by the needle roller bearings.

The annular member may be a press fit into the end of the bearing cup.

The invention will now be described by way of example with reference to the accompanying drawings, of which:-

Figure 1 is a cross-section through part of a bearing assembly of a hookes joint according to the invention.

Figure 2 is a section through part only of a modification of the invention.

Figure 3 is a section through part only of a further modification of the invention.

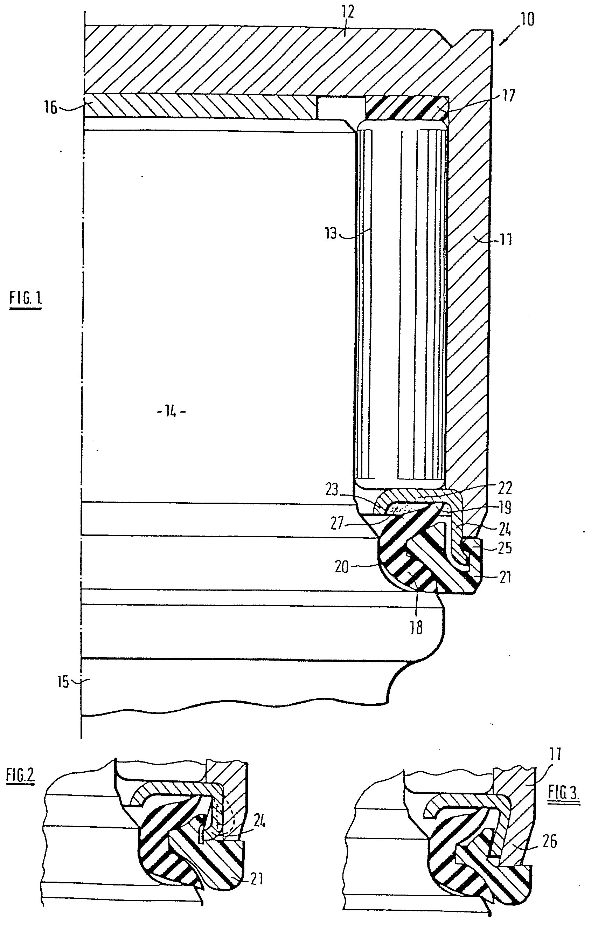

Referring firstly to Figure 1, there is shown a bearing cup 10 with a side wall 11 and base wall 12. In use, the bearing cup would be received in an aperture in an arm of a yoke of the hookes universal joint. Supported within the bearing cup, via a plurality of circumferentially spaced needle rollers 13, is a trunnion 14 of a cross-member 15 of the joint. A thrust washer 16 is interposed between the end of the trunnion 14 and the bottom wall 12 of the bearing cup, and an annular thrust washer 17 interposed between the needle rollers 13 and the wall 12.

At the free end of side wall 11 of the bearing cup is provided a seal assembly. This comprises an annular elastomeric sealing member 18 with a sealing lip 19, received on a portion 20 at the root of trunnion 14 and held thereon by a retaining ring 21, usually of a plastics material. The retaining ring 21 prevents the sealing member moving angularly on the trunnion. The lip 19 bears against an annular base portion 22 of a sheet metal member, which also has a relatively short upstanding wall portion 23 and a longer wall portion 24. The wall portion 24 is a press fit within a recess provided at the free end of the side wall 11 of the bearing cup. The end of wall 24 interfits with the retaining ring 21, at 25.

It will be observed that the base wall 22 of the annular sheet metal member and its upstanding walls 23, 24 define a shallow annular groove which faces the centre of the cross member 15 of the joint. This groove retains a certain amount of lubricant 27 under centrifugal force and ensures lubrication of the lip 19 of the sealing member 18, as the lip moves angularly relative to the sheet metal member in use, thereby enhancing the life of the latter component. In the absence of such a groove, lubricant would be driven away from the region of lip 19 under centrifugal force. The presence of lubricant 27, usually grease, in the groove also provides a more effective barrier to the entry of dirt into the bearing cup, which is also assisted by the interfitting between the retaining ring 21 and wall 24 of the sheet metal member at 25.

The base portion 22 of the annular sheet metal member abuts the ends of the needle rollers 13, ensuring that such rollers remain in their correct positions within the joint, and the wall 23 reinforces the sheet metal member to resist loads imposed on it by the needle roller bearings 13.

Referring now to Figure 2 of the drawings, there is shown an assembly which in principle is similar to that of Figure 1 with the exception that the retaining ring 21 is of a different configuration. The free end of wall 24 of the annular sheet metal member is turned inwardly instead of outwardly, and prior to pressing the member into the bearing cup the wall 24 as a whole is bent outwardly as indicated in broken lines in the drawing. After assembly in a pressing operation in which the metal member enters the bearing cup and the sealing member 18 and retaining ring 21 are pressed onto the trunnion, the wall 24 interfits with the retaining ring 21 so that the bearing cup is not easily displaced from the trunnion in storage.

In the arrangement shown in Figure 3, the side wall 11 of the bearing cup terminates in a portion 26 defining a slightly under-cut recess in which the sheet metal member is received. The member would, in effect, snap into the bearing cup during assembly, the taper of portion 26 being exaggerated in the drawing. Again, the annular sheet metal member defines a groove for lubrication of the seal, and resists displacement of the needle roller bearings within the bearing cup.

It will be noted that in all the embodiments described the lip 19 of the sealing member faces in a direction which enables excess lubricant to be expelled as fresh lubricant is forced into the bearing cup.

CLAIMS

1.   A bearing cup (10) for a Hookes universal joint, characterised by a formation (22, 23, 24) at the free end of the side wall (11) thereof for engagement by an annular sealing member (18, 19) and arranged to retain lubricant for the sealing member (19) therein under centrifugal force in use.

2.   A bearing cup according to Claim 1 further characterised in that said formation (22, 23, 24) comprises an annular groove facing the axis of rotation of the joint when in use.

3.   A bearing cup according to Claim 1 or Claim 2 further characterised in that said formation (22, 23, 24) is provided on an annular member fixed to the bearing cup (10).

4.   A bearing cup according to Claim 3 further characterised in that said annular member is of sheet metal and affords, in cross-section, a base portion (22) for engagement by said sealing member (19) and upstanding wall portions (23, 24) defining said annular groove.

5.   A Hookes universal joint comprising two yokes each having spaced substantially parallel arms, and a cross member (15) having trunnions (14) received in bearing cups (10) supported in the arms of the yokes, characterised in that each of said bearing cups (10) is as claimed in any one of the preceding claims and each trunnion (14) carries an annular sealing member (18) with a sealing formation (19) engaging with said lubricant retaining formation (22, 23, 24) of its bearing cup.

6.   A joint according to Claim 5 as appendant to Claim 4 further characterised said annular sheet metal member abuts the ends of needle roller bearings (13) between each trunnion (14) and bearing cup (10).

7. A joint according to claim 5 as appendant to claim 4, or claim 6, further characterised in that said sealing member (18) is retained on said trunnion (14) by a retaining member (21) which interfits with said annular sheet metal member in a manner to restrict or prevent ingress of dirt to said sealing formation (19).

8. A joint according to claim 5 as appendant to claim 4, or claim 6 or claim 7, further characterised in that said annular sheet metal member has been deformed during fitting to the bearing cup.

0083161

FIG. 1

FIG.2

FIG 3.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| | --- | | F 16 C   33/78 |
| X | GB-A-  995 934  (BIRFIELD ENGINEERING LTD.) <br> * Claims 1-3, 7, 8 ; figure * | 1-7 | F 16 D    3/41 |
| | --- | | |
| A | DE-B-1 075 383  (DÜRKOPPWERKE AG) <br> * Claim 1 ; figures 4', 5 * | 1,3,8 | |
| | --- | | |
| A | DE-A-2 313 091  (GLAENZER SPICER) <br> * Claims 1, 2 ; figures 1, 2 * | 1 | |
| | --- | | |
| A | DE-A-2 908 713  (SKF KUGELLAGERFABRIKEN GMBH) <br> * Claims 1, 3 ; figures 1, 2 * | 1,2,5, 8 | |
| | --- | | TECHNICAL FIELDS SEARCHED (Int. Cl. 3) |
| A | GB-A-1 200 648  (A. PITNER) <br> * Figures 1, 2 * | 1 | |
| | --- | | F 16 C   33/00 |
| A | US-A-2 896 432  (R.M. HEMPEL) <br> * Claims 1-3 ; figures 1-5 * | 1,5 | F 16 D    3/00 |
| | --- | | |
| A | US-A-3 200 615  (R.E. STOKELY) <br> * Claim 4 ; figures 1, 3 * | 1,5 | |
| | --- | | |
| A | US-A-3 479 840  (R.P. MEYERS) <br> * Figures 1, 2 * | 1,5 | |
| | ----- | | |

The present search report has been drawn up for all claims

| Place of search BERLIN | Date of completion of the search 15-02-1983 | Examiner MASSALSKI W |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82